# EUROPEAN PATENT SPECIFICATION

(11) **EP 1 489 852 B1**
(45) Date of publication and mention of the grant of the patent: **31.07.2013**
(21) Application number: 04102548.7
(22) Date of filing: 04.06.2004
(51) Int. Cl.: H04N 9/73

(54) **Method and apparatus for white balancing images**
Verfahren und Vorrichtung zum Weissabgleich von Bildern
Procédé et appareil pour la balance des blanc d'images

(30) Priority: 19.06.2003 KR 2003039844
(43) Date of publication of application: 22.12.2004
(73) Proprietor: Samsung Electronics Co., Ltd., Suwon-si, Gyeonggi-do, 443-742 (KR)
(72) Inventor: CHOI, Hyung-ok, Gyeonggi-do (KR)
(74) Representative: Read, Matthew Charles

(56) References cited:
- EP-A2- 0 429 992
- JP-A- 2000 102 030
- JP-A- 2000 197 070
- US-A- 5 485 202
- US-A- 5 619 347
- US-A- 5 644 359

## Description

The present invention relates to a method and apparatus for white balancing an image signal.

The appearance of a digitally captured image will differ according to the lighting conditions when the image was captured, e.g. using a digital still camera or a digital video camera. However, people do perceive a similar difference under different lighting conditions because human sight is adaptive and will accept various off-whites as being true white.

Digital imaging devices respond to the red, green and blue components of the sensed light which are in turn dependent on the light source illuminating the scene being captured. Different light sources can have different colour temperatures. For instance, high colour temperature light sources give a greenish white whereas low colour temperature light sources give a reddish white.

It is desirable to be able to record these off-whites as true white. To accomplish this, the RGB ratio for an achromatic subject is controlled to remain at a certain value or a colour difference signal, such as red-luminance (R-Y) or blue-luminance (B-Y), is controlled to remain at zero. This is referred to as white balance adjustment. That is, for a greenish-white colour, the red (R) gain is increased and the blue (B) gain is decreased and, for a reddish-white colour, the B gain is increased or the R gain is decreased.

In order to adjust the white balance precisely, it is necessary to detect a reference white colour accurately. In order to accomplish this, a white is ide ally set, which is used as a reference for a certain imaging environment, and this white is used to perform white balancing for a digital imaging device. However, it is troublesome to do this whenever an image is captured.

A method has been developed to determine a white based on the characteristics of a subject. This method assumes that colour of a captured picture generally comes close to an achromatic colour when an integral value is used with respect to all colour components included in the captured image, which can effectively detect a white if the captured image has a wide colour distribution inclusive of diverse colours. However, if the method is applied to instances where there is a narrow colour distribution, such as a image captured at sunset, red tomatoes, or the like, it can result in an unnatural looking image, so means to avoid the unnaturalness need to be taken.

A method involves white being detected with the centre portion of the captured image cut out, portions with low colour concentration levels extracted, except for portions with colours highly concentrated on the captured picture, or the like. This is a luminance division-based method that divides the luminance level range, inputs colour data by divided luminance level range and detects the white, a view division-based method that divides a picture-captured view into smaller views, inputs colour data by divided view, and detects the white, or the like.

However, such a luminance division-based method has the problem of having high errors when colours are corrected based on the detected white data since the white data detected includes solid colours and the like which have high luminance. In addition, the view division-based method has the problem of having high errors when colours are corrected based on the detected white colour since all colours existing on each and every divided view are mixed to detect the white colour.

JP 2000 102030 A describes a white balance controller.

US A 5,619,347 describes an apparatus for calculating a degree of white balance adjustment for a picture.

US A 5,485,202 describes a white balance adjusting apparatus.

EP A2 0 429 992 describes a white balance adjusting apparatus for automatically adjusting white balance in response to a luminance information signal and a color information signal obtained from an image sensing device.

US 5644359A describes an image input apparatus for images of persons and documents using a white balancing technique in which the first step in the division of an image into a plurality of areas, after which an average luminance of all the color data in each image area is stored.

The present invention provides a method of white balancing an image according to claim 1 appended below.

The present invention also provides an image processing apparatus according to claim 9 appended below.

The area identification may comprise dividing the image into a predetermined array of image area and identifying which of the areas has a luminance within the candidate white luminance range.

The method may be applied on a frame-by-frame or a field-by-filed basis to a video signal.

An embodiment of the present invention will now be described, by way of example, with reference to the accompanying drawings, in which:
Figure 1 is a block diagram illustrating a digital imaging device for adjusting the white balance according to the present invention;
Figure 2 is a flowchart illustrating a process for white balance adjustment according to the present invention; and
Figures 3 and 4 are diagrams illustrating white balance adjustment according the present invention.

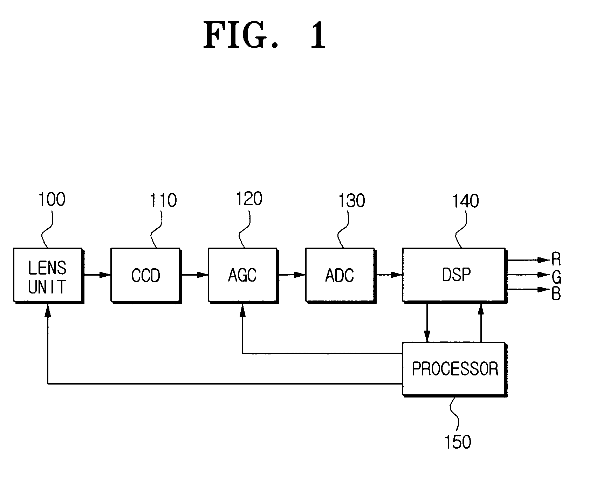

Referring to Figure 1, a digital imaging device has a lens unit 100, a charge coupled device (CCD) 110, an automatic gain control (AGC) unit 120, an analogue-to-digital converter (ADC) 130, a digital signal processor (DSP) 140 and a processor 150.

The lens unit 100 is provided with a zoom lens, a focus lens and an iris for controlling the amount of light that passes through the lens unit 100. The CCD 110 is used as an image-capturing device and photoelectrically converts light, focused onto it by the lens unit 100, into an electrical signal. The CCD 110 is read and outputs signals at or about a frame rate, i.e. at or about every 1/30 or 1/25 of a second, or at or about every field period, i.e. at or about every 1/60 or 1/50 of a second. The AGC unit 120 controls the amplification of the signal output from the CCD 110. The ADC 130 converts the AGC's output signal into a digital signal. The DSP 140 encodes the digital image signal into an National Television Standards Committee (NTSC) or phase alternating lines (PAL) image signal, or the like, and has circuits necessary for other signal processing. The processor 150 inputs colour data, output at or about every 1/60, 1/50, 1/30 or 1/25 of a seconds from the DSP 140, detects white, and calculates red (R) and blue (B) gain control values for white balance adjustments, using the detected white, and sends the calculated R and B gain control values to the DSP 140. The DSP 140 corrects colour data using the received R and B gain control values and outputs white balance adjusted colour data. The processor 150 controls the overall operation of the digital image device according to a control program stored in a memory (not shown).

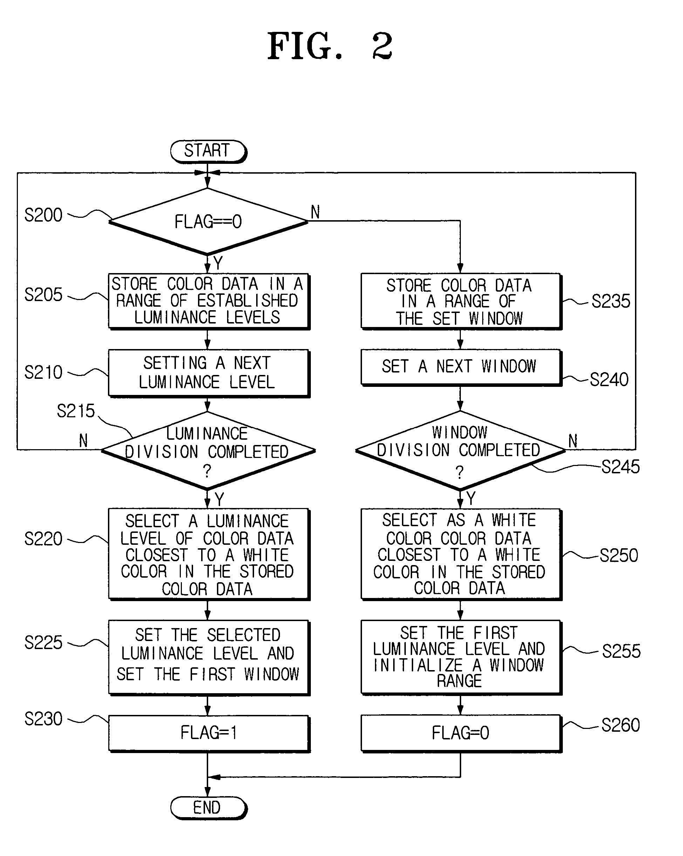

Referring to Figure 2, the flowchart shows steps performed at or about every one-frame period or at or about every one-field period during which the charge levels in the CCD 110 is read and output.

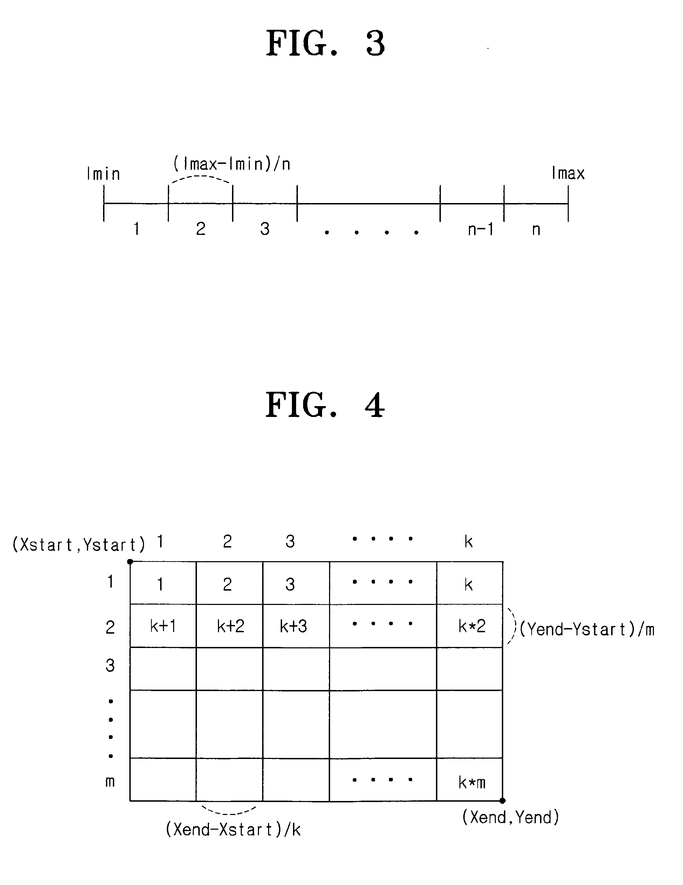

The white balance adjustment process begins with the processor 150 determining whether a FLAG value is "0" in step S200. The FLAG value is a variable indicating whether to execute a routine related to the luminance division or to execute a routine related to the view division, and the FLAG is initially set to "0". When the FLAG is "0" in step 200, step S205 is executed and the colour data, periodically sent from the DSP 140, in a range of established luminance levels is stored. Provided that the maximum luminance value and the minimum luminance value are denoted as lmax and lmin, respectively, and the number of luminance levels is n, as shown in Figure 3, the range of the first established luminance levels refers to colour data in the range of luminance values, "1", between lmin and [lmin+(lmax-lmin)/n]. The processor 150 receives and stores only colour data between these luminance levels and sets the next luminance level in step S210. The next luminance level is the value obtained when the lower and upper values of a previous luminance level are incremented by (lmax-lmin)/n respectively, which refers to a range denoted as "2" in Figure 3. When the next luminance level is completely set, the processor 150 determines whether the luminance division is completed in step S215. If the luminance division is not completed, the processor 150 repeats steps S200 through S215 when colour data is input during the next period, and receives and stores colour data up to a range belonging to a luminance level corresponding to the nth range shown in Figure 3, illustratively shown as n-1 and n. Accordingly, when the luminance division is completed, the colour data is divided into n luminance levels and each divided colour data is stored.

When the luminance division is completed, the processor 150 searches for colour data closest to white, based on the colour data divided and stored in the n luminance levels, and selects a luminance level belonging to the colour data in step S220. Furthermore, the processor 150 selects the selected luminance level to be a clip luminance level for use in the view division, and sets the first window for use in the view division in step S225. Thereafter, the processor 150 sets the FLAG to "1" in step S230, and executes a routine related to the view division from the next period.

Since the FLAG value is "1", in the next operation period, the processor 150 determines the FLAG value in step S200 and stores the colour data belonging to the range of the clip luminance level, out of the colour data pertaining to the first window in step S235. As shown in Figure 4, provided that the coordinates of an upper left end point of a view, captured by an image-capturing device, is denoted as Xstart for the X axis and Ystart for the Y axis and the coordinates of the lower right end point of the view is denoted as Xend for the X axis and Yend for the Y axis, the first window refers to a range, that is, a range denoted as "1", enclosed within the upper left end point coordinates Xstart and Ystart and the lower right end point coordinates [Xstart + (Xend - Xstart)/k] and [Ystart + (Yend - Ystart)/m]. Out of the colour data in the range, the processor 150 receives and stores the colour data belonging to the range of the clip luminance level established in the luminance division. When the colour data pertaining to the first window is completely stored, the processor 150 sets a next window, in step S240. The next window refers to a range denoted as "2" in Figure 4, so the coordinates of the Y axis for the respective end points of the first window are not changed, but the coordinates of the X axis are incremented by (Xend - Xstart)/k. The window is changed every colour data input period and, if the colour data is completely stored up to the window denoted as k*m, the window division is completed.

When the window division is complete S245-Y, the processor 150 selects, as white, the closest colour data out of the k*m colour data, stored by window in step S250. The processor 150 selects, as the final white value, the colour data with the highest value. When the final white colour value has been selected, the processor 150 sets the range of the first luminance level and initializes a window range as the first window in order to execute a routine based on the luminance division, as aforementioned, and initializes the window range as the first window in step S255. Furthermore, the processor 150 sets the FLAG to "0", and repeats the above steps during a next period. The processor 150 calculates R and B gain control values for colour corrections based on the selected white colour value. The calculated R and B gain control values are transferred to the DSP 140 in order for the colour data gain to be controlled so that colours are corrected.

As described above, the white balance adjustment method first determines a range of luminance levels to which "white" could belong using the luminance division and selects a final white value through the view division in the determined range of luminance levels, to thereby enable a relatively precise detection of white as well as to enable the white balance to be adjusted without errors.

As described above, the embodiments of the present invention detects luminance levels to which a white colour belongs using luminance division, and detects a final white colour value through the view division in a range of the detected luminance levels, to thereby detect a relatively precise white colour. Furthermore, the embodiment of the present invention adjusts the white balance using a detected white value, to thereby obtain good-quality images that are appear natural on digital image devices.

## Claims

1. A method of white balancing an image comprising a plurality of colour data, the method comprising:
establishing a plurality of luminance ranges;
dividing the image into a plurality of windows;
executing a routine relating to luminance division, wherein the routine stores for each luminance range, only colour data which belongs to the corresponding luminance range (S205);
when the routine relating to luminance division is completed, selecting a candidate white luminance range from the plurality of luminance ranges (S220), the selected candidate white luminance range containing colour data closest to white;
executing a routine relating to view division, wherein the routine stores, for each window, only colour data which belongs to the selected candidate white luminance ranger (S235);
when the routine relating to view division is completed (S245), selecting, as a reference white, the colour data stored during the routine relating to view division which is closest to white (S250); and
white balancing the input image in dependence on said reference white.

2. A method of white balancing a video signal, the method comprising performing a method according to claim 1 on a frame-by-frame or a field-by-field basis.

3. A method according to claim 1, wherein the method is a white balance adjustment method for a digital image device having an image-capturing device (100) for photoelectrically changing an optical image focused through a lens unit, and for converting the image signal from the image-capturing device into a digital signal and processing input colour data which is output in a predetermined period, further comprising the steps of:
dividing the colour data into a different one of the plurality of luminance ranges every predetermined period, and storing colour data for a different one of the plurality of image areas every predetermined period.

4. The white balance adjustment method as claimed in claim 3, further comprising the steps of:
calculating colour gain control values based on the reference white; and correcting colour data by controlling the colour data gain.

5. The white balance adjustment method as claimed in claim 3, wherein the plurality of luminance ranges is obtained by evenly dividing the range between a minimum luminance value and a maximum luminance value.

6. The white balance adjustment method as claimed in claim 3, wherein the colour data closest to white is the colour data having the highest value.

7. The white balance adjustment method as claimed in claim 3, wherein the image-capturing device is a Charge-Coupled Device (CCD).

8. The white balance adjustment method as claimed in claim 3, wherein the predetermined period is either one frame period or one field period.

9. A image processing apparatus having a white balancing function, the apparatus comprising:
means for establishing a plurality of luminance ranges;
means for dividing the image into a plurality of windows;
means for executing a routine relating to luminance division, wherein the routine stores for each luminance range, only colour data which belongs to the corresponding luminance range;
means (150) for, when the routine relating to luminance division is completed, selecting a candidate white luminance range from the plurality of luminance ranges, the selected candidate white luminance range containing colour data closest to white;
means for executing a routine relating to view division, wherein the routine stores, for each window, only colour data which belongs to the selected candidate white luminance range;
means (150) for, when the routine relating to view division is completed, selecting, as a reference white, the colour data stored during the routine relating to view division which is closest to white; and
means (140) for white balancing the input image in dependence on said reference white.

10. An apparatus according to claim 9 adapted for processing video signals.

11. An apparatus for adjusting a white balance for an image-capturing device according to claim 9, the apparatus further comprising:
a digital image device having an image-capturing device (110) for photoelectrically changing an optical image focused through a lens unit, and for converting a signal output from the image-capturing device into a digital signal and processing input colour data which is output in a predetermined period;
a lens unit (100) adapted to optically detect an object;
an automatic gain control (AGC) unit (120) adapted to control a gain for a signal output from the image-capturing device; and
a controller (150) adapted to divide the colour data into a different one of the plurality of luminance ranges every predetermined period and store colour data for a different one of the plurality of image areas every predetermined period.

12. The apparatus of claim 11, wherein the controller is further adapted to calculate colour gain control values based on the reference white and to correct colour data by controlling the colour data gain.

13. The apparatus of claim 11, wherein the plurality of luminance ranges is obtained by evenly dividing the range between a minimum luminance value and a maximum luminance value.

14. The apparatus of claim 11, wherein the controller is further adapted to detect the colour data closest to white as the colour data having the highest value.

15. The apparatus of claim 11, wherein the image-capturing device is a Charge-Coupled Device (CCD).

16. The apparatus of claim 11, wherein the predetermined period is either one frame period or one field period.

17. The apparatus of claim 11, wherein the lens unit comprises a zoom lens, a focus lens and an iris.

18. The apparatus of claim 17, wherein the zoom lens is adapted to magnify or reduce a subject to be photographed.

19. The apparatus of claim 17, wherein the focus lens is adapted to focus the image-capturing device on the subject.

20. The apparatus of claim 17, wherein the iris is adapted to control the amount of light to the image-capturing device.

21. The apparatus of claim 15, wherein the CCD is adapted to photoelectrically convert images captured through the lens unit into an electrical signal.

22. The apparatus of claim 11, further comprising:
a Digital Signal Processor (DSP) adapted to convert a digital image signal into at least one of a National Television Standards Committee (NTSC) format and a Phase Alternating Line (PAL) format.

23. The apparatus of claim 11, further comprising:
an Analog to Digital Converter (ADC) adapted to convert an analog signal from the AGC into a digital signal.

## Patentansprüche

1. Verfahren zum Weißabgleichen eines Bilds, das eine Vielzahl von Farbdaten enthält, das Verfahren umfassend:
Einrichten einer Vielzahl von Leuchtdichtebereichen;
Aufteilen des Bilds in eine Vielzahl von Fenstern;
Ausführen einer Routine, die zu Leuchtdichteaufteilung in Beziehung steht, wobei die Routine für jeden Leuchtdichtebereich nur Farbdaten speichert, die zum korrespondierenden Leuchtdichtebereich gehören (S205);
wenn die Routine, die zu Leuchtdichteaufteilung in Beziehung steht, abgeschlossen ist, Auswählen eines Kandidaten-Weiß-Leuchtdichtebereichs aus der Vielzahl von Leuchtdichtebereichen (S220), wobei der ausgewählte Kandidaten-Weiß-Leuchtdichtebereich Farbdaten enthält, die Weiß am nächsten sind;
Ausführen einer Routine, die zu Ansichtsaufteilung in Beziehung steht, wobei die Routine für jedes Fenster nur Farbdaten speichert, die zu dem ausgewählten Kandidaten-Weiß-Leuchtdichtebereich gehören (S235);
wenn die Routine, die zu Ansichtsaufteilung in Beziehung steht, abgeschlossen ist (S245), Auswählen, als ein Bezugsweiß, der Farbdaten, die während der Routine, die zu Ansichtsaufteilung in Beziehung steht, gespeichert wurden, die Weiß am nächsten sind (S250); und
Weißabgleichen des eingegebenen Bilds in Abhängigkeit von dem Bezugsweiß.

2. Verfahren zum Weißabgleichen eines Videosignals, das Verfahren umfassend, ein Verfahren nach Anspruch 1 auf einer Rahmen-für-Rahmen- oder Feld-für-Feld-Basis durchzuführen.

3. Verfahren nach Anspruch 1, wobei das Verfahren ein Weißabgleich-Anpassungsverfahren für ein digitales Bildgerät mit einer Bilderfassungsvorrichtung (100) zum fotoelektrischen Ändern eines optischen Bilds, das durch eine Linseneinheit fokussiert wird, und zum Umwandeln des Bildsignals von der Bilderfassungsvorrichtung in ein digitales Signal und Verarbeiten eingegebener Farbdaten, die in einer im Voraus bestimmten Periode ausgegeben werden, ist, ferner die folgenden Schritte umfassend:
Aufteilen der Farbdaten in einen verschiedenen einen der Vielzahl von Leuchtdichtebereichen zu jeder im Voraus bestimmten Periode und Speichern von Farbdaten für einen verschiedenen einen der Vielzahl von Bildbereichen zu jeder im Voraus bestimmten Periode.

4. Weißabgleich-Anpassungsverfahren nach Anspruch 3, ferner die folgenden Schritte umfassend:
Berechnen von Farbverstärkungs-Steuerwerten basierend auf dem Bezugsweiß; und Korrigieren von Farbdaten durch Steuern der Farbdatenverstärkung.

5. Weißabgleich-Anpassungsverfahren nach Anspruch 3, wobei die Vielzahl von Leuchtdichtebereichen durch gleichmäßiges Aufteilen des Bereichs zwischen einem minimalen Leuchtdichtewert und einem maximalen Leuchtdichtewert erhalten wird.

6. Weißabgleich-Anpassungsverfahren nach Anspruch 3, wobei die Farbdaten, die Weiß am nächsten sind, die Farbdaten mit dem höchsten Wert sind.

7. Weißabgleich-Anpassungsverfahren nach Anspruch 3, wobei die Bilderfassungsvorrichtung eine ladungsgekoppelte Vorrichtung (CCD) ist.

8. Weißabgleich-Anpassungsverfahren nach Anspruch 3, wobei die im Voraus bestimmte Periode entweder eine Rahmenperiode oder eine Feldperiode ist.

9. Bildverarbeitungsgerät mit einer Weißabgleichfunktion, das Gerät umfassend:
Mittel zum Einrichten einer Vielzahl von Leuchtdichtebereichen;
Mittel zum Aufteilen des Bilds in eine Vielzahl von Fenstern;
Mittel zum Ausführen einer Routine, die zu Leuchtdichteaufteilung in Beziehung steht, wobei die Routine für jeden Leuchtdichtebereich nur Farbdaten speichert, die zum korrespondierenden Leuchtdichtebereich gehören;
Mittel (150) zum, wenn die Routine, die zu Leuchtdichteaufteilung in Beziehung steht, abgeschlossen ist, Auswählen eines Kandidaten-Weiß-Leuchtdichtebereichs aus der Vielzahl von Leuchtdichtebereichen, wobei der ausgewählte Kandidaten-Weiß-Leuchtdichtebereich Farbdaten enthält, die Weiß am nächsten sind;
Mittel zum Ausführen einer Routine, die zu Ansichtsaufteilung in Beziehung steht, wobei die Routine für jedes Fenster nur Farbdaten speichert, die zu dem ausgewählten Kandidaten-Weiß-Leuchtdichtebereich gehören;
Mittel (150) zum, wenn die Routine, die zu Ansichtsaufteilung in Beziehung steht, abgeschlossen ist, Auswählen, als ein Bezugsweiß, der Farbdaten, die während der Routine, die zu Ansichtsaufteilung in Beziehung steht, gespeichert wurden, die Weiß am nächsten sind; und
Mittel (140) zum Weißabgleichen des eingegebenen Bilds in Abhängigkeit von dem Bezugsweiß.

10. Gerät nach Anspruch 9, angepasst zum Verarbeiten von Videosignalen.

11. Gerät zum Anpassen eines Weißabgleichs für eine Bilderfassungsvorrichtung nach Anspruch 9, das Gerät ferner umfassend:
ein digitales Bildgerät mit einer Bilderfassungsvorrichtung (110) zum fotoelektrischen Ändern eines optischen Bilds, das durch eine Linseneinheit fokussiert wird, und zum Umwandeln eines von der Bilderfassungsvorrichtung ausgegebenen Signals in ein digitales Signal und Verarbeiten eingegebener Farbdaten, die in einer im Voraus bestimmten Periode ausgegeben werden;
eine Linseneinheit (100), die angepasst ist, um ein Objekt optisch zu detektieren;
eine Einheit für automatische Verstärkungssteuerung (AGC) (120), die angepasst ist, um eine Verstärkung für ein von der Bilderfassungsvorrichtung ausgegebenes Signal zu steuern; und
eine Steuerung (150), die angepasst ist zum Aufteilen der Farbdaten in einen verschiedenen einen der Vielzahl von Leuchtdichtebereichen zu jeder im Voraus bestimmten Periode und Speichern von Farbdaten für einen verschiedenen einen der Vielzahl von Bildbereichen zu jeder im Voraus bestimmten Periode.

12. Gerät nach Anspruch 11, wobei die Steuerung ferner angepasst ist zum Berechnen von Farbverstärkungs-Steuerwerten basierend auf dem Bezugsweiß und zum Korrigieren von Farbdaten durch Steuern der Farbdatenverstärkung.

13. Gerät nach Anspruch 11, wobei die Vielzahl von Leuchtdichtebereichen durch gleichmäßiges Aufteilen des Bereichs zwischen einem minimalen Leuchtdichtewert und einem maximalen Leuchtdichtewert erhalten wird.

14. Gerät nach Anspruch 11, wobei die Steuerung ferner angepasst ist zum Detektieren der Farbdaten, die Weiß am nächsten sind, als die Farbdaten mit dem höchsten Wert.

15. Gerät nach Anspruch 11, wobei die Bilderfassungsvorrichtung eine ladungsgekoppelte Vorrichtung (CCD) ist.

16. Gerät nach Anspruch 11, wobei die im Voraus bestimmte Periode entweder eine Rahmenperiode oder eine Feldperiode ist.

17. Gerät nach Anspruch 11, wobei die Linseneinheit eine Zoomlinse, eine Fokuslinse und eine Iris umfasst.

18. Gerät nach Anspruch 17, wobei die Zoomlinse angepasst ist, um ein zu fotografierendes Motiv zu vergrößern oder zu reduzieren.

19. Gerät nach Anspruch 17, wobei die Fokuslinse angepasst ist, um die Bilderfassungsvorrichtung auf das Motiv zu fokussieren.

20. Gerät nach Anspruch 17, wobei die Iris angepasst ist, um die Lichtmenge zu der Bilderfassungsvorrichtung zu steuern.

21. Gerät nach Anspruch 15, wobei die CCD angepasst ist, um Bilder, die durch die Linseneinheit erfasst wurden, fotoelektrisch in ein elektrisches Signal umzuwandeln.

22. Gerät nach Anspruch 11, ferner umfassend:
einen Digitalsignalprozessor (DSP), der angepasst ist, um ein digitales Bildsignal in mindestens eines eines National Television Standards Committee- bzw. NTSC-Formats und eines Phase Alternating Line- bzw. PAL-Formats umzuwandeln.

23. Gerät nach Anspruch 11, ferner umfassend:
- einen Analog-zu-Digital-Wandler (ADC), der angepasst ist, um ein analoges Signal von der AGC in ein digitales Signal umzuwandeln.

## Revendications

1. Procédé destiné à réaliser l'équilibrage des blancs sur une image comprenant une pluralité de données de couleur, le procédé comportant les opérations consistant à :
établir une pluralité de gammes de luminance ;
diviser l'image en une pluralité de fenêtres ;
exécuter un sous-programme relatif à la division de la luminance, cas dans lequel le sous-programme stocke, pour chaque gamme de luminance, uniquement les données de couleur qui appartiennent à la gamme de luminance correspondante (S205) ;
lorsque le sous-programme relatif à la division de la luminance est achevé, sélectionner une gamme de luminance blanche candidate à partir de la pluralité de gammes de luminance (S220), la gamme de luminance blanche candidate ayant été sélectionnée contenant des données de couleur qui se rapprochent le plus du blanc ;
exécuter un sous-programme relatif à la division de la vue, cas dans lequel le sous-programme stocke, pour chaque fenêtre, uniquement les données de couleur qui appartiennent à la gamme de luminance blanche candidate ayant été sélectionnée (S235) ;
lorsque le sous-programme relatif à la division de la vue est achevé (S245), sélectionner à titre de blanc de référence, les données de couleur ayant été stockées pendant le sous-programme relatif à la division de la vue lesquelles se rapprochent le plus du blanc (S250) ; et
réaliser l'équilibrage des blancs sur l'image saisie, en fonction dudit blanc de référence.

2. Procédé destiné à réaliser l'équilibrage des blancs sur un signal vidéo, le procédé comprenant la réalisation d'un procédé selon la revendication 1 sur une base trame par trame, ou champ par champ.

3. Procédé selon la revendication 1, le procédé étant un procédé d'ajustage de l'équilibrage des blancs pour un dispositif à images numériques possédant un dispositif à capture d'images (100) pour modifier de façon photo-électrique une image optique laquelle a fait l'objet d'une focalisation par l'intermédiaire d'une unité à objectif, et pour convertir le signal d'image provenant du dispositif à capture d'images en un signal numérique et traiter les données de couleur de saisie qui sont produites dans une période prédéterminée, comprenant en outre les étapes consistant à :
diviser les données de couleur en une gamme de luminance différente de la pluralité de gammes de luminance lors de chaque période prédéterminée, et stocker les données de couleur pour une zone différente de la pluralité de zones d'image lors de chaque période prédéterminée.

4. Procédé d'ajustage de l'équilibrage des blancs selon la revendication 3, comprenant en outre les étapes consistant à :
calculer les valeurs de contrôle du gain chromatique sur la base du blanc de référence ; et
rectifier les données de couleur grâce au contrôle du gain des données de couleur.

5. Procédé d'ajustage de l'équilibrage des blancs selon la revendication 3, la pluralité de gammes de luminance étant obtenue grâce à une division uniforme de la gamme entre une valeur de luminance minimum et une valeur de luminance maximum.

6. Procédé d'ajustage de l'équilibrage des blancs selon la revendication 3, les données de couleur qui se rapprochent le plus du blanc étant les données de couleur qui ont la valeur la plus élevée.

7. Procédé d'ajustage de l'équilibrage des blancs selon la revendication 3, le dispositif à capture d'images étant un dispositif à transfert de charges (CCD).

8. Procédé d'ajustage de l'équilibrage des blancs selon la revendication 3, la période prédéterminée étant soit une période de trame soit une période de champ.

9. Appareil de traitement d'image doté d'une fonction d'équilibrage des blancs, l'appareil comprenant :
des moyens pour établir une pluralité de gammes de luminance ;
des moyens pour diviser l'image en une pluralité de fenêtres ;
des moyens pour exécuter un sous-programme relatif à la division de la luminance, cas dans lequel le sous-programme stocke, pour chaque gamme de luminance, uniquement les données de couleur qui appartiennent à la gamme de luminance correspondante ;
des moyens (150), lorsque le sous-programme relatif à la division de la luminance est achevé, pour sélectionner une gamme de luminance blanche candidate à partir de la pluralité de gammes de luminance, la gamme de luminance blanche candidate ayant été sélectionnée contenant des données de couleur qui se rapprochent le plus du blanc ;
des moyens pour exécuter un sous-programme relatif à la division de la vue, cas dans lequel le sous-programme stocke, pour chaque fenêtre, uniquement les données de couleur qui appartiennent à la gamme de luminance blanche candidate ayant été sélectionnée ;
des moyens (150), lorsque le sous-programme relatif à la division de la vue est achevé, pour sélectionner à titre de blanc de référence, les données de couleur ayant été stockées pendant le sous-programme relatif la division de la vue lesquelles se rapprochent le plus du blanc ; et
des moyens (140) pour réaliser l'équilibrage des blancs sur l'image saisie, en fonction dudit blanc de référence.

10. Appareil selon la revendication 9, conçu pour le traitement de signaux vidéo.

11. Appareil destiné à ajuster un équilibrage des blancs pour un dispositif à capture d'images selon la revendication 9, l'appareil comprenant en outre :
un dispositif à images numériques possédant un dispositif à capture d'images (110) pour modifier de façon photo-électrique une image optique laquelle a fait l'objet d'une focalisation par l'intermédiaire d'une unité à objectif, et pour convertir une sortie de signal provenant du dispositif à capture d'images en un signal numérique et traiter les données de couleur de saisie qui sont produites dans une période prédéterminée ;
une unité à objectif (100) conçue pour détecter optiquement un objet ;
une unité de commande automatique de gain (AGC) (120) conçue pour commander un gain pour une sortie de signal provenant du dispositif à capture d'images ; et
un contrôleur (150) conçu pour diviser les données de couleur en une gamme de luminance différente de la pluralité de gammes de luminance lors de chaque période prédéterminée, et stocker les données de couleur pour une zone différente de la pluralité de zones d'image lors de chaque période prédéterminée.

12. Appareil selon la revendication 11, le contrôleur étant conçu en outre pour calculer les valeurs de contrôle du gain chromatique sur la base du blanc de référence et pour rectifier les données de couleur grâce au contrôle du gain des données de couleur.

13. Appareil selon la revendication 11, la pluralité de gammes de luminance étant obtenue grâce à une division uniforme de la gamme entre une valeur de luminance minimum et une valeur de luminance maximum.

14. Appareil selon la revendication 11, le contrôleur étant conçu en outre pour détecter les données de couleur qui se rapprochent le plus du blanc comme étant les données de couleur qui ont la valeur la plus élevée.

15. Appareil selon la revendication 11, le dispositif à capture d'images étant un dispositif à transfert de charges (CCD).

16. Appareil selon la revendication 11, la période prédéterminée étant soit une période de trame soit une période de champ.

17. Appareil selon la revendication 11, l'unité à objectif comprenant une lentille de zoom, une lentille de focalisation et un diaphragme.

18. Appareil selon la revendication 17, la lentille à zoom étant conçue pour agrandir ou réduire un sujet destiné à être photographié.

19. Appareil selon la revendication 17, la lentille de focalisation étant conçue pour focaliser le dispositif à capture d'images sur le sujet.

20. Appareil selon la revendication 17, le diaphragme étant conçu pour piloter la quantité de lumière se rendant vers le dispositif à capture d'images.

21. Appareil selon la revendication 15, le CCD étant conçu pour convertir de façon photo-électrique des images, capturées par l'intermédiaire de l'unité à objectif, en un signal électrique.

22. Appareil selon la revendication 11, comprenant en outre :
un processeur de signaux numérisés (DSP) conçu pour convertir un signal d'image numérique en au moins un format, à savoir un format NTSC (National Television Standards Committee) et un format PAL (Phase Alternating Line).

23. Appareil selon la revendication 11, comprenant en outre :
un convertisseur Analogique / Numérique (ADC) conçu pour convertir un signal analogique provenant de l'AGC en un signal numérique.
